(19) Europäisches Patentamt / European Patent Office / Office européen des brevets

(11) **EP 3 481 069 B1**

(12) **FASCICULE DE BREVET EUROPEEN**

(45) Date de publication et mention de la délivrance du brevet:
**27.04.2022   Bulletin 2022/17**

(21) Numéro de dépôt: **18198263.8**

(22) Date de dépôt: **02.10.2018**

(51) Classification Internationale des Brevets (IPC):
*H04N 21/2343* (2011.01)     *H04N 21/24* (2011.01)
*H04N 21/647* (2011.01)      *H04N 21/845* (2011.01)
*H04N 21/434* (2011.01)      *H04N 21/2381* (2011.01)
*H04N 21/222* (2011.01)      *H04L 29/08* (2006.01)
*H04L 29/06* (2006.01)

(52) Classification Coopérative des Brevets (CPC):
**H04L 65/605; H04L 65/607; H04L 65/80;
H04L 67/2852; H04L 67/30; H04N 21/222;
H04N 21/2343; H04N 21/23439; H04N 21/2381;
H04N 21/2402; H04N 21/64738; H04N 21/8456;**
H04N 21/434

(54) **PROCÉDÉ ET SYSTÈME DE TRAITEMENT D'UN CONTENU MULTIMÉDIA DANS UN RÉSEAU DE ZONE MÉTROPOLITAINE**

VERFAHREN UND SYSTEM ZUR VERARBEITUNG EINES MULTIMEDIA-INHALTS IN EINEM BALLUNGSGEBIET

METHOD AND SYSTEM FOR PROCESSING MULTIMEDIA CONTENT IN A METROPOLITAN AREA NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2017   FR 1760337**

(43) Date de publication de la demande:
**08.05.2019   Bulletin 2019/19**

(73) Titulaire: **ATEME**
**78140 Velizy Villacoublay (FR)**

(72) Inventeurs:
• **TOULLEC, Eric**
  **35230 Orgères (FR)**
• **VIÉRON, Jérôme**
  **35830 Betton (FR)**

(74) Mandataire: **Plasseraud IP**
**66, rue de la Chaussée d'Antin**
**75440 Paris Cedex 09 (FR)**

(56) Documents cités:
**EP-A1- 2 566 172          EP-A1- 2 661 045
US-A1- 2011 082 924     US-A1- 2014 280 764
US-A1- 2014 355 625**

• **Open Iptv Forum: "OIPF Release 2 Specification Volume 2a - HTTP Adaptive Streaming [V2.1] - [2011-06-21]", , 21 juin 2011 (2011-06-21), XP055016201, Extrait de l'Internet: URL:http://www.oipf.tv/docs/Release2/V2.1/ OIPF-T1-R2-Specification-Volume-2a-HTTP-Ad aptive-Streaming-V2_1-2011-06-21.pdf [extrait le 2012-01-11]**
• **LASZLO BÖSZÖRMENYI ET AL: "Metadata-driven optimal transcoding in a multimedia proxy", MULTIMEDIA SYSTEMS, SPRINGER, BERLIN, DE, vol. 13, no. 1, 8 mars 2007 (2007-03-08), pages 51-68, XP019543631, ISSN: 1432-1882, DOI: 10.1007/S00530-007-0077-X**

EP 3 481 069 B1

## Description

Le domaine de l'invention se rapporte aux procédés et systèmes de traitement d'un contenu multimédia au sein d'un réseau de type MAN (Metropolitan Area Network).

Au cours des dernières années, la distribution de la télévision numérique a connu plusieurs évolutions. De nouveaux services audiovisuels tels que la vidéo à la demande (VOD) ou la télévision de rattrapage (Catch-Up TV) se sont développés et ont conduit au développement d'infrastructures réseaux offrant une bande passante plus large afin de faciliter la fourniture de tels services en plus de la distribution télévisuelle traditionnelle (Broadcast). Un exemple est décrit dans le document EP2566172A1.

Ces évolutions ont entraîné la création d'un nouveau type de services, appelé services OTT (Over-The-Top) ou services par contournement, assurant la livraison multi-écrans de contenus multimédias (vidéo et audio notamment) sur Internet. La participation d'un opérateur de réseau traditionnel dans le contrôle de la distribution du contenu est superflue pour que les services OTT fonctionnent. Ainsi, les services OTT sont fournis par l'intermédiaire de réseaux dits non managés, c'est-à-dire des réseaux dont la qualité de service (QoS) ou la bande passante varie pour chaque client et varie dans le temps. Néanmoins, les infrastructures réseaux supportant ces services OTT atteignent leurs limites lorsque le nombre de clients est trop important. Les fournisseurs de services OTT sont donc dans l'incapacité de maîtriser la qualité de service ressentie par l'utilisateur final. La fourniture de services OTT fonctionne en point à point, chaque client disposant de sa propre connexion pour télécharger les contenus multimédias. Aussi, lorsque le nombre de clients augmente, la bande passante consommée augmente également ce qui entraine une surcharge des équipements amonts des fournisseurs de services OTT et aussi une surcharge des réseaux avals de distribution jusqu'à l'utilisateur final. Cette surcharge est accentuée par la multiplicité des formats de distribution des contenus multimédias qui obligent les fournisseurs de services OTT à conserver et gérer plusieurs versions d'un même contenu sous différents formats.

De plus, les fournisseurs de contenus ont un contrôle limité de la charge des plateformes de distribution. En effet, les protocoles OTT sont centrés sur le logiciel client. Celui-ci peut ainsi décider du débit qu'il va demander à la plateforme de distribution sans tenir compte des capacités et limites de celle-ci, ce qui peut conduire à une saturation de la plateforme de distribution.

La présente invention vient améliorer la situation.

Il est proposé un procédé de traitement mis en œuvre par des moyens informatiques, dans un réseau de zone métropolitaine (MAN), d'un contenu multimédia préalablement encodé numériquement en un flux audio-vidéo et transmis depuis une plateforme de distribution en vue d'une transmission à la demande à une pluralité de terminaux de réception, le procédé comprenant les étapes selon la revendication 1. :

Le procédé proposé permet la distribution de contenus multimédias aux terminaux de réception et notamment une distribution OTT (Over-The-Top). Cette distribution est mise en œuvre notamment par la transformation et la segmentation de flux de données, appelés alors *profils*. Les profils sont sélectionnés en fonction des requêtes reçues puis transmis aux terminaux de réception. La réalisation du procédé au sein d'un réseau de zone métropolitaine (MAN) permet de réduire la charge sur le réseau en amont, c'est-à-dire le réseau transportant les flux audio-vidéo à la plateforme de distribution, puisque ce dernier transporte un unique flux audio-vidéo pour un contenu multimédia donné.

Selon un aspect, la fonction de démultiplexage est adaptée pour générer un premier groupe de flux de données vidéo, un deuxième groupe de flux de données audio et un troisième groupe de flux de données de texte et/ou sous-titrage.

La fonction de démultiplexage permet de décomposer le flux audio-vidéo en flux de données vidéo, en flux de données audio et en flux de données de texte et/ou sous-titrage puisque ces flux nécessitent respectivement un traitement et des transformations différentes.

Lorsque les conditions du réseau de zone métropolitaine le permettent, un transcodage permet une plus grande latitude concernant la transformation appliquée sur les différents flux de données. Par transcodage, on entend la combinaison de processus consistant à décoder puis à encoder ultérieurement un flux de données. En effet, la transformation appliquée sur des flux de données décodés et donc décompressés est moins restrictive que la transformation appliquée sur des flux de données déjà encodés et donc compressés.

L'application d'une transformation supplémentaire sur les flux segmentés, c'est-à-dire les profils, permet d'adapter les profils et donc le manifeste aux conditions du réseau de zone métropolitaine. Par exemple, si les conditions du réseau ne permettent pas la distribution d'un profil produit, la transformation supplémentaire permet de filtrer ce profil et donc de ne pas distribuer ce profil aux terminaux de réception. En conséquence, ce profil est supprimé du manifeste, alors mis à jour, pour éviter toute demande, via une requête, de distribution du profil en question.

Selon un aspect, l'étape de segmentation des flux de données est mise en œuvre selon un protocole de type *HTTP Adaptative Streaming.*

La segmentation des flux de données selon un protocole de type HTTP Adaptative Streaming (HAS) permet une distribution OTT selon les standards HAS et permet également de produire plusieurs versions d'un même profil selon les protocoles de segmentation utilisés. Cette diversité des protocoles HAS permet de s'adapter aux différents terminaux de réception et d'ainsi assurer une diffusion multi-écrans.

Selon un aspect, l'au moins un flux de données sélectionné est transmis à destination du terminal de réception via un serveur du réseau de zone métropolitaine (MAN), le serveur étant distant de la plateforme de distribution et de la pluralité de terminaux de réception, et couplé à une mémoire, la mémoire étant adaptée pour stocker temporairement l'au moins un flux de données transmis.

Selon un aspect, l'au moins un flux de données sélectionné est transmis à destination du terminal de réception via un serveur du réseau de zone métropolitaine (MAN), le serveur étant distant de la plateforme de distribution et de la pluralité de terminaux de réception, et couplé à une mémoire, la mémoire étant adaptée pour stocker temporairement l'au moins un flux de données transmis, la durée de conservation de l'au moins un flux de données stocké dans la mémoire étant fonction du protocole. Selon un aspect, en réponse à une requête ultérieure à la première et émise par un deuxième terminal de réception parmi la pluralité de terminaux de réception, au moins un flux de données stocké dans la mémoire est transmis audit deuxième terminal de réception.

Le serveur du réseau de zone métropolitaine permet de stocker les différents profils demandés par les terminaux de réception. Ainsi, si un terminal de réception transmet une requête pour la diffusion d'un profil déjà stocké dans la mémoire du serveur, celui-ci peut transmettre le profil demandé au terminal de réception. En particulier, la durée de stockage d'un profil est d'autant plus longue que sa probabilité d'être à nouveau demandé est élevée.

L'invention vise en outre un programme informatique comprenant des instructions pour la mise en œuvre du procédé, lorsque les instructions sont exécutées par au moins un processeur.

L'invention vise enfin un système de traitement, dans un réseau de zone métropolitaine (MAN), d'un contenu multimédia, préalablement encodé numériquement en un flux audio-vidéo et transmis au système depuis une plateforme de distribution, en vue d'une transmission à la demande à une pluralité de terminaux de réception, selon la revendication 8.

Comme expliqué précédemment en référence au procédé, le système proposé est localisé au sein du réseau de zone métropolitaine (MAN), donc au plus près des terminaux de réception. La localisation du système proposé permet de réduire la charge sur le réseau en amont transportant les flux audio-vidéo à la plateforme de distribution.

Selon un aspect, la plateforme de distribution forme une passerelle entre un réseau étendu (WAN) et le réseau de zone métropolitaine (MAN).

L'unité de traitement ou l'unité de traitement supplémentaire localisée dans le système permet aux fournisseurs de contenu d'avoir davantage de maîtrise dans la distribution des contenus multimédias et de modifier ou de supprimer des profils ne respectant pas les conditions du réseau de zone métropolitaine.

D'autres caractéristiques, détails et avantages de l'invention apparaîtront à la lecture de la description détaillée ci-après, et à l'analyse des dessins annexés, sur lesquels :

- La **Figure 1** illustre un ensemble, comprenant une plateforme de distribution, un système selon un premier mode de réalisation de l'invention, un serveur distant et une pluralité de terminaux de réception ;
- La **Figure 2** illustre l'ensemble de la **Figure 1,** comprenant un système selon un deuxième mode de réalisation de l'invention ;
- La **Figure 3** illustre un procédé de traitement d'un contenu multimédia selon l'invention ;
- La **Figure 4** illustre une étape du procédé de la **Figure 3** selon un premier mode de réalisation de l'invention ; et
- La **Figure 5** illustre l'étape de la **Figure 4** selon un deuxième mode de réalisation de l'invention.

Dans la suite, du contenu multimédia est encodé en un flux audio-vidéo pour permettre le transport du contenu, par exemple de manière connue en soit. Il est fait mention de « stockage de flux ». Le lecteur comprendra qu'il s'agit de stocker des données tirées d'un flux. Sauf mention contraire, les données tirées d'un flux sont stockées sans décodage préalable, notamment dans le but d'être à nouveau transportées.

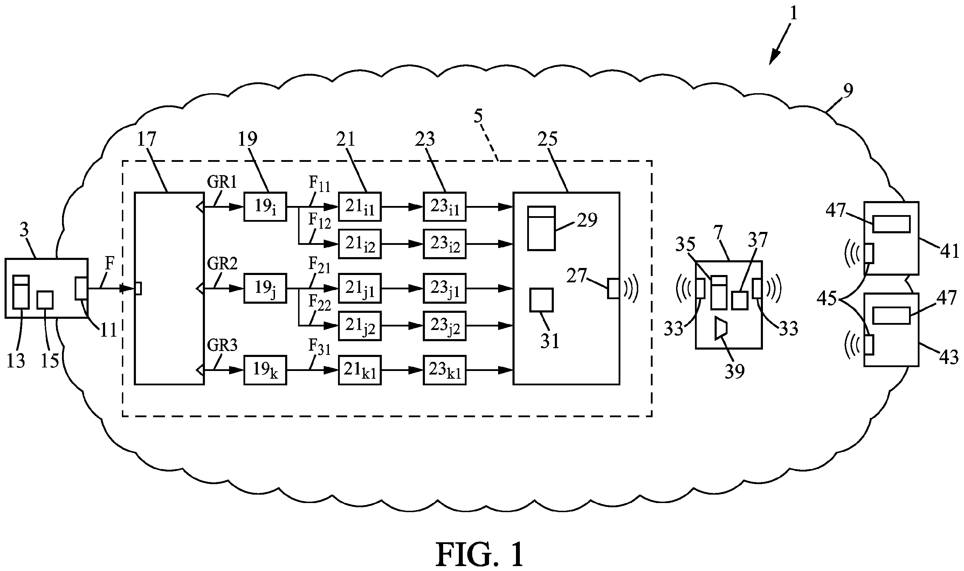

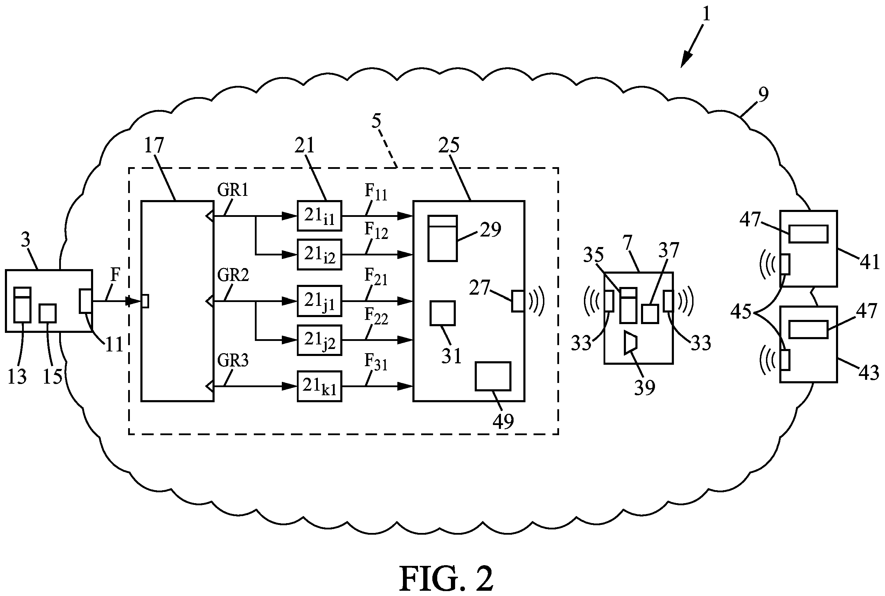

Les **Figures 1** et **2** illustrent un ensemble 1. L'ensemble 1 comprend une plateforme de distribution 3, un système 5, un serveur distant 7 et une pluralité de terminaux 41, 43 de réception. L'ensemble 1 est localisé dans un réseau 9 de zone métropolitaine, connu sous l'acronyme anglophone MAN (Metropolitan Area Network). Le réseau 9 est, ici, défini par la norme IEEE 802.2001 : *« IEEE Standard for Local and Metropolitan Area Networks: Overview and Architecture, 8 March 2002 ».*

La plateforme de distribution 3 est agencée pour transmettre un flux audio-vidéo F correspondant à un contenu multimédia au système 5. La plateforme de distribution 3 est par exemple connue sous l'acronyme anglophone CDN (Content Delivery Network). Dans le contexte de l'invention, la plateforme de distribution 3 est agencée pour réaliser une distribution dite OTT (Over-The-Top). On comprend donc que le réseau 9 de zone métropolitaine est typiquement un réseau dit non managé, c'est-à-dire un réseau dont la qualité de service (QoS) ou la bande passante varie pour chaque client et varie dans le temps. Typiquement, le flux audio-vidéo F provient d'une tête de réseau d'un réseau étendu, connu sous l'acronyme anglophone WAN (Wide Area Network), par exemple le réseau Internet. Avantageusement, la plateforme de distribution 3 forme une passerelle entre le réseau étendu et le réseau 9 de zone métropolitaine.

Le contexte de l'invention concerne donc la distribution OTT. Néanmoins, la plateforme de distribution 3 et le système 5 sont agencés en outre pour mettre en œuvre au moins en partie la diffusion large ou diffusion télévisuelle traditionnelle ou *broadcast.*

Le contenu multimédia désigne ici un contenu vidéo et/ou audio. Dans l'exemple décrit ici, le contenu multimédia comprend en outre du contenu texte tel que des sous-titres. Un tel contenu est destiné à être livré à au moins un terminal de réception parmi la pluralité de terminaux de réception pour rendre le contenu multimédia accessible à un utilisateur du terminal de réception. La livraison du contenu multimédia au terminal de réception nécessite un traitement numérique du contenu. Ici, le contenu multimédia est préalablement encodé numériquement sous la forme du flux audio-vidéo F apte à subir le traitement décrit ci-après. On comprend que le contenu multimédia est encodé numériquement en amont de la plateforme de distribution 3, au niveau du réseau étendu avant d'être transmis à la plateforme de distribution 3. Par exemple, le flux audio-vidéo F est encodé numériquement au niveau de la tête de réseau. Ensuite, un traitement numérique est appliqué au flux audio-vidéo F encodé. Le traitement numérique est exécuté par un équipement dans le réseau 9 de zone métropolitaine, par exemple la plateforme de distribution 3 elle-même ou un autre équipement.

La plateforme de distribution 3 comprend un module de communication 11, une mémoire 13 et un processeur 15.

Le module de communication 11 est configuré recevoir le flux audio-vidéo F, par exemple via le réseau étendu en amont. Le module de communication 11 est en outre agencé pour transmettre le flux audio-vidéo F à destination de l'ensemble 5 en aval. Une plateforme de distribution 3 peut être reliée à une pluralité de réseaux tels que le réseau 9 de zone métropolitaine.

La mémoire 13 est adaptée pour stocker temporairement le flux audio-vidéo F reçu. Dans l'exemple décrit ici, un seul flux audio-vidéo F correspondant à un contenu multimédia est stocké. Néanmoins, la mémoire 13 est adaptée pour stocker temporairement plusieurs flux audio-vidéo. La mémoire 13 est par exemple une mémoire cache. En outre, la mémoire 13 stocke un programme informatique dont l'exécution par le processeur 15 se traduit par le fonctionnement de la plateforme de distribution 3. Avantageusement, la mémoire 13 comprend une adresse de l'ensemble 5 et/ou les adresses respectives des terminaux de réception de la pluralité de terminaux de réception pour l'acheminement du flux audio-vidéo F à destination de l'ensemble 5 correspondant.

On comprendra ici que les capacités de stockage de la plateforme de distribution 3 sont peu sollicitées par comparaison à des têtes de réseaux stockant tous les flux reçus. En effet, pour un contenu multimédia donné, un unique flux audio-vidéo F est conservé, et ce de manière temporaire.

Dans un premier mode de réalisation, illustré en Figure 1, le système 5 comprend un module de démultiplexage 17, au moins un module de décodage 19, ici trois modules de décodage 19, au moins une première unité de traitement 21, ici cinq premières unités de traitement 21, au moins un module d'encodage 23, ici cinq modules d'encodage 23, et un intégrateur 25. Avantageusement, le système 5 et ses composants sont physiquement regroupés et de préférence à proximité ou dans de la zone géographique correspondant au réseau 9 de zone métropolitaine. Le système 5 est, par exemple, localisé dans un point de présence, connu sous l'acronyme anglophone PoP (Point-of-Presence).

Le module de démultiplexage 17 est agencé pour appliquer une fonction de démultiplexage au flux audio-vidéo F reçu de la plateforme de distribution 3 via son module de communication 11. La fonction de démultiplexage permet de générer une pluralité de groupes de flux de données, tirés du flux audio-vidéo F. Par exemple, la pluralité de groupes de flux de données comprend au moins un premier groupe GR1 de flux de données vidéo, un deuxième groupe GR2 de flux de données audio et un troisième groupe GR3 de flux de données texte et/ou de sous-titrage.

Chaque groupe de flux de données comprend au moins un flux de données. Dans l'exemple illustré en **Figure 1,** le premier groupe GR1 de flux de données vidéo comprend un premier $F_{11}$ et un deuxième $F_{12}$ flux de données vidéo. Le deuxième groupe GR2 de flux de données audio comprend un premier $F_{21}$ et un deuxième $F_{22}$ flux de données audio. Le troisième groupe GR3 de flux de données de sous-titrage comprend, ici, un unique flux $F_{31}$ de données de sous-titrage. En sortie du module de démultiplexage 17, tous les flux de données d'un groupe de flux de données sont identiques. Dans l'exemple décrit ici, on a donc en sortie du module de démultiplexage 17 :

$$F_{11} = F_{12}$$

$$F_{21} = F_{22}$$

Comme expliqué précédemment, le flux audio vidéo F est un flux encodé numériquement. Par « encodé numériquement », on entend ici que le flux audio-vidéo F est un flux compressé selon un standard donné de compression. Par conséquent, les flux de données de chaque groupe de flux de données sont également des flux compressés selon ce même standard de compression.

Chaque module de décodage 19 est agencé pour décoder numériquement les flux de données d'un groupe de flux de données en sortie du module de démultiplexage 17. Un module de décodage 19 est associé respectivement à chacun des groupes de flux de données. Dans l'exemple décrit ici, un module de décodage 19ᵢ est adapté pour décoder les flux de données vidéo du premier groupe GR1, un module de décodage 19ⱼ est adapté pour décoder les flux de données audio du deuxième groupe GR2 et un module de décodage $19_k$ est adapté pour décoder le flux de données de sous-titrage du troisième groupe GR3.

Le même décodage numérique est appliqué à chaque flux de données d'un même groupe de flux de données.

Par « décodage numérique », on entend ici que chaque flux de données d'un groupe de flux de données est, en sortie du module de décodage 19 associé, un flux non compressé en bande de base.

La première unité de traitement 21, ci-après l'unité de traitement 21, est adaptée pour appliquer une première transformation TR1 sur chaque flux de données en sortie du module de décodage 19. Plus précisément, une unité de traitement 21 est associée respectivement à chaque flux de données en sortie du module de décodage 19 associé. Dans l'exemple décrit ici, une unité de traitement $21_{i1}$ est adaptée pour appliquer une première transformation TR1 sur le premier flux de données vidéo $F_{11}$ et une unité de traitement $21_{i2}$ est adaptée pour appliquer une première transformation TR1 sur le deuxième flux de données vidéo $F_{12}$. De même, une unité de traitement $21_{j1}$ est adaptée pour appliquer une première transformation TR1 sur le premier flux de données audio $F_{21}$ et une unité de traitement $21_{j2}$ est adaptée pour appliquer une première transformation TR1 sur le deuxième flux de données audio $F_{22}$. Enfin, une unité de traitement $21_{k1}$ est adaptée pour appliquer une première transformation TR1 sur le flux de données de sous-titrage $F_{31}$.

Dans l'exemple décrit ici, un traitement numérique différent est appliqué à chaque flux de données. Les flux de données d'un même groupe de flux de données peuvent donc être différents les uns des autres en sortie de l'unité de traitement 21. Par exemple, pour un même groupe, des flux de données de différentes tailles peuvent être obtenus en jouant sur la qualité du contenu multimédia au cours du traitement.

Par « traitement numérique », on entend ici que la première transformation TR1 appliquée à un flux de données en sortie du module de décodage 19 est une opération ou un ensemble d'opérations parmi au moins les opérations suivantes : modification du nombre de trames par secondes, redimensionnement, réduction du bruit, lissage ou correction d'erreurs présentes dans le flux. La première transformation TR1 peut évidemment désigner d'autres types d'opérations connues applicables à un flux de données dans le domaine du traitement numérique.

Le module d'encodage 23 est agencé pour encoder numériquement chaque flux de données en sortie de l'unité de traitement 21. Plus précisément, un module d'encodage 23 respectif est associé respectivement à chaque flux de données en sortie de l'unité de traitement 21 associée. Dans l'exemple décrit ici, un module d'encodage $23_{i1}$ est adapté pour encoder le premier flux de données vidéo $F_{11}$ et un module d'encodage $23_{i2}$ est adapté pour encoder le deuxième flux de données vidéo $F_{12}$. De même, un module d'encodage $23_{j1}$ est adapté pour encoder le premier flux de données audio $F_{21}$ et un module d'encodage $23_{j2}$ est adapté pour encoder le deuxième flux de données audio $F_{22}$. Enfin, un module d'encodage $23_{k1}$ est adapté pour encoder le flux de données de sous-titrage $F_{31}$.

Avantageusement, un procédé d'encodage numérique différent est appliqué sur chaque flux de données.

Comme expliqué précédemment, chaque flux de données d'un groupe de flux de données en sortie du module de décodage 19 associé est un flux non compressé en bande de base. Par « encodage numérique », on entend ici que chaque flux de données décodé et transformé est compressé selon un standard de compression donné.

En sortie du module d'encodage 23, les flux de données d'un même groupe de flux de données ont été successivement décodés selon un même processus de décodage, puis se sont vus appliqués chacun une première transformation TR1 spécifique, et enfin un processus d'encodage spécifique. Par la suite, on appellera *transcodage* la combinaison de processus consistant à décoder puis à encoder ultérieurement un flux de données. Le mode de réalisation illustré en **Figure 1** est donc un mode de réalisation permettant la mise en œuvre d'un processus de transcodage.

Les différents flux de données, encodés et transformés, d'un même groupe de flux de données sont appelés *profils* dans la suite de la description.

Dans l'exemple décrit ici, le premier groupe GR1 de flux de données vidéo comprend un premier profil vidéo $F_{11}$ et un deuxième profil vidéo $F_{12}$. Le deuxième groupe GR2 de flux de données audio comprend un premier profil audio $F_{21}$ et un deuxième profil audio $F_{22}$. Enfin, le troisième groupe GR3 de flux de données de sous-titrage comprend un profil de sous-titrage $F_{31}$.

Les profils d'un groupe de flux de données correspondent à diverses versions d'un même contenu multimédia initial. Ainsi, le premier groupe GR1 comprend une ou plusieurs versions, ici deux profils donc deux versions, d'un même contenu vidéo, le deuxième groupe GR2 comprend une ou plusieurs versions, ici deux profils donc deux versions, d'un même contenu audio et le troisième groupe GR3 comprend une ou plusieurs versions, ici un profil donc une version, d'un contenu de sous-titrage. L'existence de différents profils permet de s'adapter aux caractéristiques et capacités propres de chaque terminal de réception parmi la pluralité de terminaux de réception. Par exemple et de manière non limitative, les différents profils vidéo se distinguent par le nombre d'images par seconde, par la résolution, par le standard de compression et/ou par la définition. Par exemple et de manière non limitative, les différents profils audio se distinguent par exemple par le nombre de pistes, par le standard de compression et/ou le nombre de trames par seconde. Par exemple et de manière non limitative, les différents profils de sous-titrage se distinguent par la langue et/ou le type de sous-titrage (sous-titrage des voix uniquement ou complet à destination de personnes malentendantes).

L'intégrateur 25 (ou « packager » en anglais) est agencé pour segmenter en une pluralité de segments chaque flux de données, donc chaque profil, d'au moins un groupe de flux de données. La segmentation des profils est mise en œuvre selon un protocole de type *HTTP Adaptative Streaming* (connu sous l'acronyme anglophone « HAS »). La segmentation des profils est donc réalisée dans des formats permettant une distribution OTT selon les standards HAS. Par exemple, le protocole de segmentation de la pluralité de segments est un protocole de type MP4, MPEG2-TS ou tout autre protocole connu. Avantageusement, un même profil est segmenté selon plusieurs protocoles. On comprend ici que plusieurs versions d'un même profil sont produites, chaque version étant caractérisée au moins par le protocole de segmentation appliqué au profil. On comprend donc ici que l'intégrateur 25 est agencé pour mettre en œuvre au moins en partie une distribution OTT. Néanmoins, comme expliqué précédemment, l'intégrateur 25 est agencé en outre pour permettre, au moins en partie, la diffusion en broadcast.

Parallèlement ou consécutivement à la segmentation des flux de données, donc des profils, l'intégrateur 25 est agencé pour produire un *manifeste.* Le manifeste est un document contenant des informations relatives aux caractéristiques de chaque profil et des segments associés. Le manifeste est ici défini par la norme ISO/IEC 23009. Plus spécifiquement, le manifeste comporte des données représentatives des flux de données segmentés, donc des profils obtenus. Plus spécifiquement, on comprend ici que, pour un profil obtenu et renseigné dans le manifeste, des données représentatives du profil en question sont comprises dans le manifeste produit. Par exemple, pour un profil donné et renseigné dans le manifeste produit, les données représentatives du profil en question comprennent des données représentatives du protocole de segmentation du profil. Les données représentatives du profil en question peuvent comprendre des données représentatives de la taille des segments obtenus.. Typiquement, le manifeste est produit dans un format XML. Le manifeste est un document de faible taille par comparaison aux données de contenu multimédia qu'il qualifie. Il peut donc être largement diffusé sans que cela ait une influence négative importante sur la charge des réseaux. Le manifeste est mis à disposition, rendu accessible, aux terminaux de réception. On comprend donc qu'une partie au moins du manifeste est transmis à une partie au moins des terminaux de réception. En outre, le manifeste peut être mis à jour au sein de l'intégrateur. La mise à jour du manifeste est par exemple fonction des conditions du réseau 9 de zone métropolitaine. On comprend ici qu'il est possible que les conditions du réseau 9 de zone métropolitaine ne permettent pas, temporairement, la distribution d'un profil même si ce profil a pu être généré et segmenter. Dans un tel cas, ce profil peut par exemple être filtré du manifeste. En d'autres termes, les données représentatives du profil en question sont supprimées du manifeste. Ainsi, le profil filtré ne peut plus être demandé par un terminal de réception. Le manifeste mis à jour est ensuite rendu accessible aux terminaux de réception à la place du manifeste précédent. Ainsi, tant que les conditions du réseau 9 de zone métropolitaine ne permettent pas la distribution d'un profil, un utilisateur ne peut demander la distribution du profil en question, ce dernier n'étant pas renseigné dans le manifeste.

L'intégrateur 25 est agencé en outre pour sélectionner, à la réception d'une requête émise par un terminal de réception parmi la pluralité de terminaux de réception, au moins un flux de données d'au moins un groupe de flux de données segmentés en fonction de la requête reçue. L'intégrateur 25 est en outre agencé pour transmettre l'au moins un flux de données sélectionné au terminal de réception à l'origine de la requête via le serveur distant 7. Dans le contexte de l'invention, un terminal de réception émet une requête à destination de l'intégrateur 25 pour accéder d'un contenu multimédia via la diffusion d'un ou plusieurs profils correspondant à ce contenu multimédia. Comme expliqué précédemment, les profils accessibles à un terminal de réception sont renseignés dans le manifeste rendu accessible au terminal de réception. Typiquement, pour accéder à un contenu multimédia donné, un terminal de réception envoie une requête pour la diffusion d'un profil vidéo, d'un profil audio et d'un profil de texte et/ou sous-titrage. Les profils disponibles sont les profils renseignés dans le manifeste. La distribution des profils demandés dans la requête constitue une distribution dite *à la demande.*

L'intégrateur 25 comprend un module de communication 27, une mémoire 29 et un processeur 31.

Le module de communication 27 est agencé pour recevoir la requête émise par un terminal de réception de la pluralité de terminaux de réception via le serveur distant 7. Le module de communication 27 est agencé pour recevoir les différents profils de chaque groupe de flux de données en sortie du module d'encodage 23. Le module de communication 27 est en outre agencé pour émettre les profils segmentés à destination du terminal de réception via le serveur distant 7.

La mémoire 29 est adaptée pour stocker temporairement les différents profils de chaque groupe en sortie du module d'encodage 23. La mémoire 29 inclut par exemple une mémoire cache. En outre, la mémoire 29 stocke un programme informatique dont l'exécution par le processeur 31 se traduit par le fonctionnement de l'intégrateur 25. Avantageusement, la mémoire 29 comprend les adresses respectives des terminaux de réception de la pluralité de terminaux de réception pour l'acheminement des profils segmentés à destination des terminaux de réception.

Dans un mode de réalisation, l'intégrateur 25 est agencé pour chiffrer les segments et/ou le manifeste transmis au serveur distant.

Le serveur distant 7 est adapté pour transmettre des segments ou des profils segmentés reçus en provenance de l'intégrateur 25 à destination d'un terminal de réception parmi la pluralité de terminaux de réception. On comprend ici que le serveur distant 7 est adapté pour permettre à la pluralité de terminaux de réception d'accéder aux profils segmentés transmis.

Le serveur distant 7 comprend un module de communication 33, une mémoire 35 et un processeur 37.

Le module de communication 33 est configuré recevoir les segments ou profils segmentés émis par l'intégrateur 25. Le module de communication 33 est configuré pour transmettre une requête reçue en provenance d'un terminal de réception à l'intégrateur 25.

La mémoire 35 est agencée pour stocker temporairement les segments ou profils segmentés reçus. La mémoire 35 inclut, par exemple, une mémoire cache. Avantageusement, la durée de conservation d'un profil ou d'un segment dans la mémoire 35 est déterminée en fonction du protocole de segmentation. Un profil ou un segment est conservé dans la mémoire 35 d'autant plus longtemps que le protocole de segmentation dont il résulte est susceptible d'être demandé par les utilisateurs par l'intermédiaire des requêtes. On comprend ici qu'une probabilité est associée, au sein du serveur distant 7, à un profil segmenté stocké dans la mémoire 35. Cette probabilité correspond à la probabilité que ce profil soit à nouveau demandé par un autre terminal de réception. Cette probabilité est par exemple déterminée en fonction du protocole de segmentation du profil segmenté en question. Ainsi, en réponse à une requête ultérieure émise par un deuxième terminal de réception de la pluralité de terminaux de réception, le serveur distant 7 est agencé pour transmettre un segment ou un profil segmenté stocké dans la mémoire 35 au deuxième terminal de réception. Les segments ou profils segmentés fréquemment utilisés restent disponibles dans la mémoire 35 tandis que les segments ou profils segmentés rarement demandés sont, à terme, supprimés de la mémoire 35.

En outre, la mémoire 35 stocke un programme informatique dont l'exécution par le processeur 37 se traduit par le fonctionnement du serveur distant 7.

Comme expliqué précédemment, la distribution des profils segmentés est mise en œuvre selon les standards HAS dans le contexte d'une distribution OTT. Néanmoins, et comme précisé précédemment, le système 5 est agencé en outre pour mettre en œuvre au moins en partie la diffusion large ou diffusion télévisuelle traditionnelle ou broadcast dans un ou plusieurs modes de réalisation. Pour permettre la diffusion de contenu multimédia en broadcast, le serveur distant 7 comprend, dans un ou plusieurs modes de réalisation, un module de multiplexage 39.

Le module de multiplexage 39 est agencé pour générer un contenu multimédia incluant de la vidéo, de l'audio et du texte et/ou sous-titrage. De même que pour la distribution OTT, le contenu généré par le module de multiplexage 39 est transmis à un terminal de réception de la pluralité de terminaux de réception via le module de communication 33.

Dans le cadre du broadcast, les flux sont diffusés, c'est-à-dire envoyés sur le réseau sans requête. A l'inverse, dans la distribution OTT, les flux sont mis à disposition des terminaux de réception et ne sont distribués que sur réception des requêtes reçues en provenance des terminaux de réception. Comme expliqué précédemment, le système 5 et le serveur 7 sont agencés pour permettre à la fois une distribution OTT et une diffusion en broadcast.

Dans l'exemple illustré en **Figure 1,** la pluralité de terminaux de réception comprend un premier terminal de réception 41 et un deuxième terminal de réception 43. Les terminaux de réception 41, 43 sont aptes à recevoir des segments ou des profils segmentés en provenance de l'intégrateur 25 via le serveur distant 7. Les terminaux de réception 41, 43 sont agencés en outre pour générer, à partir des segments ou des profils segmentés reçus, le contenu multimédia auquel l'utilisateur souhaite accéder. Alternativement, le contenu multimédia demandé est généré au niveau du serveur distant 7 puis est transmis aux terminaux de réception.

Les premier et deuxième terminaux de réception 41, 43 comprennent chacun un module de communication 45 et un écran 47. Par exemple, le premier terminal de réception 41 est un ordinateur et le deuxième terminal de réception 43 est une télévision.

Le module de communication 45 est configuré pour recevoir le contenu multimédia transmis par le serveur distant 7. Le module de communication 45 est en outre adapté pour émettre une requête à destination du serveur distant 7.

L'écran 47 est adapté pour diffuser une partie au moins du contenu multimédia reçu par le module de communication 45.

Les premier 41 et deuxième 43 terminaux de réception sont agencés pour générer des requêtes à destination du serveur distant 7. Les requêtes peuvent contenir une combinaison de paramètres déterminés automatiquement, par exemple un niveau de qualité du contenu multimédia en fonction de la qualité de la connexion, et des paramètres sélectionnés par l'utilisateur, par exemple par l'intermédiaire d'une interface homme-machine. Ces paramètres sont par exemple, et de manière non limitative, le débit, la résolution, la définition de l'image ou la présence ou non de sous-titres.

La **Figure 2** illustre le système 5 selon un deuxième mode de réalisation. Ce deuxième mode de réalisation se distingue du premier mode de réalisation décrit précédemment en ce qu'il est dépourvu de module destiné au transcodage. En d'autres termes, le système 5 de ce deuxième mode de réalisation ne comprend pas de module de décodage 19 ni de module d'encodage 23.

Ainsi, l'unité de traitement 21 est agencée pour appliquer une première transformation TR1 sur chaque flux de données déjà encodé. Dans le contexte de ce deuxième mode de réalisation, les différents profils de chaque groupe de flux de données correspondent aux différents flux de données préalablement encodés puis transformés de chaque groupe de flux de données.

Comme expliqué précédemment, ce deuxième mode de réalisation est mis en œuvre sans transcodage. La première transformation TR1 de ce deuxième mode de réalisation est donc appliquée sur des flux de données déjà compressés. A l'inverse, la première transformation TR1 du premier mode de réalisation décrit précédemment en référence à la **Figure 1** est appliquée à des flux de données décodés et donc décompressés. La première transformation TR1 appliquée sur des flux de données déjà compressés est plus restrictive que la première transformation TR1 appliquée sur des flux de données décompressés. On comprend donc que seule une partie des opérations applicables aux flux de données décompressés est applicable aux flux de données compressés.

Le deuxième mode de réalisation se distingue du premier mode de réalisation en outre par la présence d'une deuxième unité de traitement 49, ci-après l'unité de traitement 49.

L'unité de traitement 49 est incluse dans l'intégrateur 25. Alternativement, la deuxième unité de traitement 49 intervient en sortie de l'unité de traitement 21.

L'unité de traitement 49 est agencée pour appliquer une transformation supplémentaire TR2, ci-après deuxième transformation TR2, sur au moins un profil segmenté. La deuxième transformation TR2 inclut par exemple un filtrage et/ou une compression d'au moins un flux de données. En variante, la distinction entre l'unité de traitement 21 et l'unité de traitement 49 est seulement fonctionnelle : les deux traitements peuvent être mis en œuvre au moins en partie par un même équipement informatique.

Dans l'exemple décrit, l'unité de traitement 19 et l'unité de traitement 49 sont deux unités de traitement réalisant respectivement la première transformation TR1 et la deuxième transformation TR2. Alternativement, l'unité de traitement 19 et l'unité de traitement 49 sont une même unité de traitement agencée pour appliquer la première transformation TR1 et la deuxième transformation TR2.

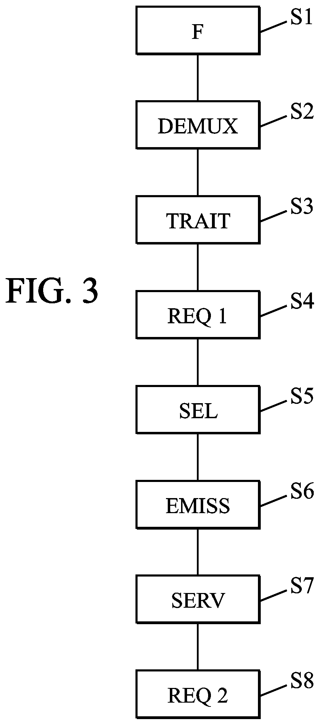

Un procédé de traitement du contenu multimédia dans le réseau 9 de zone métropolitaine est décrit ci-après en référence à la **Figure 3.** Le contenu multimédia est distribué dans le cadre d'une distribution OTT. Typiquement, le réseau 9 de zone métropolitaine est un réseau dit non managé, c'est-à-dire des réseaux dont la qualité de service (QoS) ou la bande passante varie pour chaque client et varie dans le temps

Dans une première étape S1, la plateforme de distribution 3 reçoit un contenu multimédia, préalablement encodé numériquement en un flux audio-vidéo F. Par exemple, le contenu multimédia a été encodé numériquement par la tête de réseau dans un réseau étendu et le flux audio-vidéo F résultant a été transmis à la plateforme de distribution 3. Dans un mode de réalisation, la plateforme de distribution 3 joue le rôle de passerelle entre le réseau étendu et le réseau 9 de zone métropolitaine (MAN). À l'issue de cette première étape S1, le flux audio-vidéo F est transmis par le module de communication 11 de la plateforme de distribution 3 au système 5. Comme expliqué précédemment, le système 5 est typiquement localisé dans un point de présence, ou PoP. En particulier dans l'exemple décrit ici, le flux audio-vidéo F est transmis par le module de communication 11 au module de démultiplexage 17.

Dans une deuxième étape S2, le module de démultiplexage 17 applique une fonction de démultiplexage au flux audio-vidéo F. Cette fonction de démultiplexage génère au moins un groupe de flux de données. Dans l'exemple décrit en **Figure 1,** la fonction de démultiplexage génère un premier groupe GR1 de flux de données vidéo, un deuxième groupe GR2 de flux de données audio et un troisième groupe GR3 de flux de données de texte et/ou sous-titrage. Le premier groupe GR1 de flux de données vidéo comprend un premier $F_{11}$ et un deuxième $F_{12}$ flux de données vidéo. Le deuxième groupe GR2 de flux de données audio comprend un premier $F_{21}$ et un deuxième $F_{22}$ flux de données audio. Enfin, le troisième groupe GR3 de flux de données de sous-titrage comprend un flux $F_{31}$ de données de sous-titrage.

Une troisième étape S3 comprend le traitement numérique des flux de données des groupes de flux de données. La troisième étape S3 inclut la génération et le traitement des différents profils pour chaque groupe de flux de données. Les profils obtenus sont ensuite segmentés au sein de l'intégrateur 25, puis stockés dans la mémoire 29 de l'intégrateur 25. La troisième étape S3 inclut en outre la génération d'un manifeste. Comme expliqué précédemment, le manifeste est un document rendu accessible aux terminaux de réception et contenant des informations relatives aux caractéristiques de chaque profil et des segments associés. Le manifeste comporte plus particulièrement des données représentatives des flux de données segmentés, donc des profils obtenus. Par exemple, pour un profil donné et renseigné dans le manifeste produit, les données représentatives du profil en question comprennent des données représentatives du protocole de segmentation du profil. Les données représentatives du profil en question peuvent comprendre des données représentatives de la taille des segments obtenus. Le manifeste permet aux terminaux de réception de déterminer quels sont les profils disponibles. Un premier et un deuxième mode de réalisation de cette troisième étape S3 seront décrits en détails ci-après. Comme expliqué par la suite, cette étape S3 correspond en fait à une suite d'étapes qui diffèrent selon le mode de réalisation. A l'issue de cette troisième étape S3, des profils sont sélectionnés par l'intégrateur 25 en vue d'une distribution à au moins un terminal de réception.

Dans une quatrième étape S4, l'intégrateur 25 reçoit une requête en provenance d'un terminal de réception parmi la pluralité de terminaux de réception. Par exemple, la requête est émise par le premier terminal de réception 41. La requête comprend des données représentatives du choix de profils que l'utilisateur du terminal de réception souhaite recevoir. Comme expliqué précédemment, les profils disponibles sont renseignés dans le manifeste rendu accessible au terminal de réception. Ainsi l'utilisateur peut effectuer un choix parmi les profils disponibles par l'intermédiaire d'une interface du terminal de réception. Les profils demandés via la requête sont donc nécessairement des profils renseignés dans le manifeste. Dans l'exemple décrit ici, plusieurs profils vidéo correspondant à un même contenu multimédia sont disponibles. De même, plusieurs profils audio correspondant à un même contenu multimédia sont disponibles. Enfin, plusieurs profils de texte et/ou sous-titrage correspondant à un même contenu multimédia sont disponibles. En outre, et comme expliqué ci-dessus chaque profil peut être segmenté dans la mémoire 29 de l'intégrateur 25 selon différents protocoles de type HTTP Adaptative Streaming. Ainsi, plusieurs versions d'un même profil sont donc stockées dans la mémoire 29, chaque version correspondant à un protocole de segmentation. La requête peut comprendre en outre des informations d'adressage telles que l'adresse du terminal de réception et optionnellement toute autre information utile à l'acheminement du ou des profils segmentés demandés à destination du terminal par l'intermédiaire du serveur distant 7.

Dans une cinquième étape S5, l'intégrateur 25 sélectionne en fonction de la requête reçue au moins un profil segmenté. Avantageusement, l'intégrateur 25 sélectionne au moins un profil par groupe de flux de données, c'est-à-dire par groupe de profils. À titre d'exemple, l'intégrateur peut sélectionner le premier profil vidéo $F_{11}$, le deuxième profil audio $F_{22}$ et le profil de texte et/ou sous-titrage $F_{31}$. La sélection d'au moins un profil par groupe de profils permet la génération d'un contenu multimédia comprenant un contenu vidéo, un contenu audio et un contenu de texte et/ou sous-titrage.

Dans une sixième étape S6, le module de communication 27 de l'intégrateur 25 transmet les profils sélectionnés au serveur distant 7 en vue d'une distribution en OTT au terminal de réception à l'origine de la requête traitée. L'intégrateur peut transmettre en outre un manifeste produit ou un manifeste mis à jour par l'intégrateur au serveur distant 7 en vue de rendre accessible aux terminaux de réception le manifeste, et donc d'informer les utilisateurs respectifs des terminaux de réception des profils et protocoles disponibles.

Dans une septième étape S7, le module de communication 33 du serveur distant 7 reçoit les profils segmentés transmis par l'intégrateur 25. Le ou les profils segmentés sont stockés temporairement dans la mémoire 35. Comme expliqué précédemment, la durée de conservation d'un profil segmenté ou d'un segment dépend de la probabilité que le profil segmenté ou segment en question soit à nouveau demandé par un autre terminal de réception. Autrement dit, plus un profil segmenté ou un segment est susceptible de faire l'objet d'une requête émise par un terminal de réception, plus la durée de conservation de ce profil segmenté ou segment sera élevée. Typiquement, cette durée de conservation est fonction du protocole de segmentation du profil considéré. On comprend ici que certains protocoles de segmentation peuvent être plus demandés que d'autres. Dans un mode de réalisation, le contenu multimédia demandé est généré au niveau du serveur distant, par exemple par le processeur 31, à partir des profils segmentés reçus, conformément à la requête. Mais comme expliqué précédemment, le contenu multimédia peut, dans un autre mode de réalisation, être généré au niveau des terminaux de réception, le serveur distant 7 relayant simplement les profils segmentés ou des segments.

Par exemple, dans une huitième étape S8, une nouvelle requête est émise par un terminal de réception parmi la pluralité de terminaux de réception. Par exemple, le deuxième terminal de réception 43 émet une requête, via le module de communication 45, au serveur distant 7 pour accéder à un contenu multimédia identifié. Si cette nouvelle requête est similaire à la requête précédemment traitée et que les profils segmentés ou segments demandés sont toujours stockés dans la mémoire 35, le serveur 7 transmet le contenu multimédia demandé sans qu'il soit nécessaire d'adresser la requête à l'intégrateur 25.

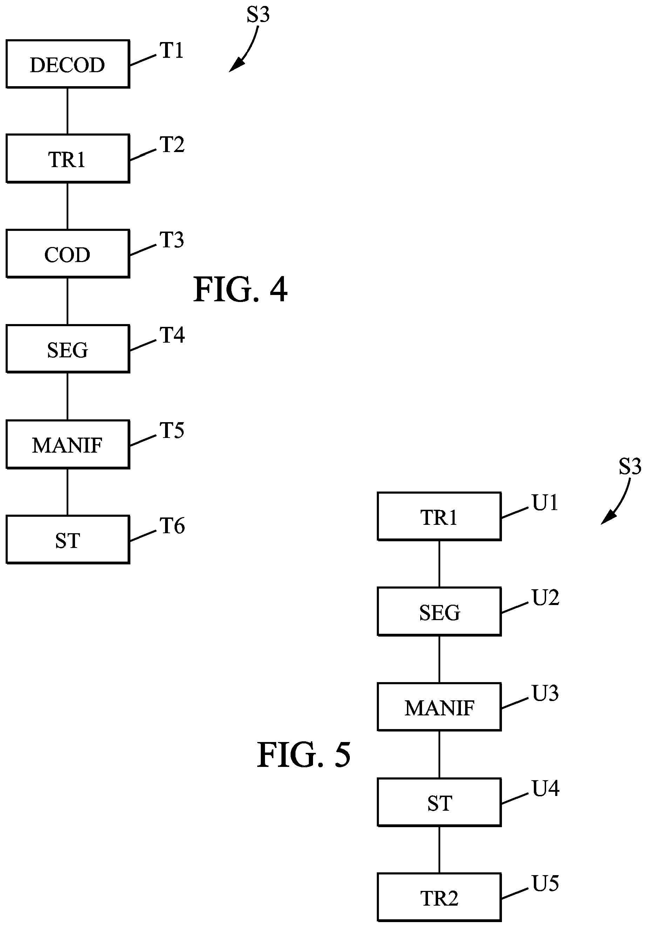

En référence à la **Figure 4,** la troisième étape S3 va être décrite selon un premier mode de réalisation du procédé. Ce mode de réalisation est mis en œuvre par l'ensemble 1 illustré en **Figure 1.** Un tel mode de réalisation est, par exemple, mis en œuvre lorsque le transcodage est possible au niveau du réseau 9 de zone métropolitaine.

Dans une première étape T1, les flux de données de chaque groupe de flux de données sont décodés numériquement par le module de décodage 19 en sortie du module de démultiplexage 17. Comme expliqué précédemment, un module de décodage 19 est associé respectivement à chaque groupe de flux de données. Dans l'exemple décrit ici, un module de décodage est adapté pour décoder les flux de données vidéo du premier groupe GR1, un module de décodage est adapté pour décoder les flux de données audio du deuxième groupe GR2 et un module de décodage est adapté pour décoder les flux de données de sous-titrage du troisième groupe GR3.

Comme expliqué précédemment, on entend par « décodage numérique », que chaque flux de données d'un groupe de flux de données est, en sortie du module de décodage 19 associé, un flux non compressé en bande de base.

Dans une deuxième étape T2, une première transformation TR1 est appliquée par la première unité de traitement 21, ci-après l'unité de traitement 21, sur chaque flux de données en sortie du module de décodage 19. Comme expliqué précédemment, une unité de traitement 21 est attribuée à chacun des flux de données.

Comme expliqué précédemment, on entend par « traitement numérique » que la première transformation TR1 appliquée à un flux de données en sortie du module de décodage 19 est une opération ou un ensemble d'opérations parmi les opérations suivantes : modification du nombre de trames par secondes, redimensionnement, réduction du bruit, lissage ou correction d'erreurs présentes dans le flux. La première transformation TR1 peut désigner d'autres types d'opérations connues applicables à un flux de données.

Dans une troisième étape T3, chaque flux de données est encodé numériquement en sortie de l'unité de traitement 21 par un module d'encodage 23. Comme expliqué précédemment, un module d'encodage 23 respectif est associé à chacun des flux de données. Les différents flux de données en sortie des modules d'encodage 23 constituent différents profils.

Comme expliqué précédemment, on entend par « encodage numérique » que chaque flux de données décodé et transformé est compressé selon un standard donné.

Les différents profils d'un même groupe de flux de données correspondent à différentes versions d'un même contenu multimédia. Dans l'exemple décrit ici, le premier groupe GR1 comprend deux profils, donc deux versions, d'un même contenu vidéo. Le deuxième groupe GR2 comprend deux profils d'un même contenu audio. Le troisième groupe GR3 contient un seul profil d'un contenu de sous-titrage.

Dans une quatrième étape T4, les profils obtenus sont respectivement segmentés en une pluralité de segments. Chaque segment correspond à un fragment temporel du contenu multimédia. Typiquement, un segment correspond à quelques secondes du contenu multimédia. Comme expliqué précédemment, la segmentation des profils est mise en œuvre selon un protocole de type HTTP Adaptative Streaming. Par exemple, le protocole de segmentation de la pluralité de segments est un protocole de type MP4 ou MPEG2-TS. Un même profil est segmenté selon plusieurs protocoles. Ainsi plusieurs versions d'un même profil sont produites, chaque version étant caractérisée au moins par le protocole de segmentation appliqué au profil.

Dans une cinquième étape T5, parallèlement ou consécutivement à l'étape T4, l'intégrateur 25 génère un manifeste. Comme expliqué précédemment, le manifeste est un document contenant des informations relatives aux caractéristiques de chaque profil et des segments associés. Le manifeste comporte des données représentatives des flux de données segmentés, c'est à dire des profils obtenus. On comprend ici que, pour un profil obtenu et renseigné dans le manifeste, des données représentatives du profil en question sont comprises dans le manifeste produit. Par exemple, pour un profil donné et renseigné dans le manifeste, les données représentatives du profil en question comprennent des données représentatives du protocole de segmentation du profil. Les données représentatives du profil en question peuvent comprendre des données représentatives de la taille des segments obtenus. Typiquement, le manifeste est produit dans un format XML. Le manifeste est destiné à être mis à disposition, rendu accessible, aux terminaux de réception. En outre, le manifeste peut être mis à jour au sein de l'intégrateur, indépendamment des profils. La mise à jour du manifeste est par exemple fonction de paramètres du réseau 9 de zone métropolitaine. Par exemple, les paramètres d'un réseau 9 de zone métropolitaine peuvent ne pas permettre, temporairement ou non, la distribution d'un profil même si ce profil a pu être préalablement généré et segmenté. Dans un tel cas, les données relatives ce profil peuvent, par exemple, être supprimées du manifeste. Le manifeste mis à jour est ensuite rendu accessible aux terminaux de réception en remplacement du manifeste précédent. Ainsi, tant que les conditions du réseau 9 de zone métropolitaine ne permettent pas la distribution d'un profil, un utilisateur ne peut demander la distribution du profil en question, ce dernier n'étant pas renseigné dans le manifeste, et ce indépendamment de la disponibilité effective du profil en amont du réseau 9 de zone métropolitaine.

Dans une sixième étape T6, les profils segmentés obtenus sont stockés dans la mémoire 29 de l'intégrateur 25.

Les étapes T1, T2, T3, T4, T5 et T6 de ce premier mode de réalisation sont ici appelées « étapes » mais peuvent être également considérées comme des sous-étapes de l'étape S3. Comme expliqué précédemment, l'exécution des étapes T1, T2, T3, T4, T5 et T6 est un mode de réalisation de l'exécution de l'étape S3. Dans le mode de réalisation du procédé décrit en référence à la **Figure 4,** la segmentation des profils selon différents protocoles précède la réception d'une requête. Néanmoins, les technologies de fourniture en temps réel, dites de *Just in Time* (JIT), permettent de procéder à la segmentation des profils reçus par l'intégrateur 25 à réception de la requête et en fonction de la requête. En variante, un profil est segmenté, à l'avance ou à réception d'une première requête, selon un seul protocole, avantageusement le protocole le plus susceptible d'être demandé, de manière à optimiser les capacités de stockage de la mémoire 29 de l'intégrateur 25.

En référence à présent à la **Figure 5,** la troisième étape S3 va être décrite selon un deuxième mode de réalisation. Ce mode de réalisation est mis en œuvre par l'ensemble 1 illustré en **Figure 2.** Dans ce deuxième mode de réalisation, il n'y a pas de transcodage. Autrement dit, le traitement numérique est appliqué à des flux préalablement encodés et non encore décodés.

Dans une première étape U1, une première transformation TR1 est appliquée par l'unité de traitement 21 sur chaque flux de données encodé. Comme expliqué précédemment, une unité de traitement 21 respective est associée à chacun des flux de données. Les différents flux de données en sortie de l'unité de traitement 21 constituent les différents profils de chaque groupe de flux de données. Comme expliqué précédemment, la première transformation TR1 de ce deuxième mode de réalisation est donc appliquée sur des flux de données encodés, donc déjà compressés. La première transformation TR1 appliquée sur des flux de données déjà compressés est plus restrictive que la première transformation TR1 appliquée sur des flux de données décompressés : seule une partie des opérations applicables aux flux de données décompressés est applicable aux flux de données compressés.

Dans une deuxième étape U2, similaire à l'étape T4 du premier mode de réalisation, les profils obtenus sont respectivement segmentés en une pluralité de segments. Chaque segment correspond à un fragment temporel du contenu multimédia. Typiquement, un segment correspond à quelques secondes du contenu multimédia. Comme expliqué précédemment, la segmentation des profils est mise en œuvre selon un protocole de type HTTP Adaptative Streaming. Par exemple, le protocole de segmentation de la pluralité de segments est un protocole de type MP4 ou MPEG2-TS. Un même profil est segmenté selon plusieurs protocoles. On comprend ici que plusieurs versions d'un même profil sont produites, chaque version étant caractérisée au moins par le protocole de segmentation appliqué au profil.

Dans une troisième étape U3, similaire à l'étape T5 du premier mode de réalisation, parallèlement ou consécutivement à l'étape U2, l'intégrateur 25 génère un manifeste, comportant des données représentatives des flux de données segmentés, c'est à dire des profils obtenus. Le manifeste est destiné à être mis à disposition, rendu accessible, aux terminaux de réception.

Dans une quatrième étape U4, similaire à l'étape T6 du premier mode de réalisation, les profils segmentés obtenus sont stockés dans la mémoire 29 de l'intégrateur 25.

Dans une cinquième étape U5, une deuxième transformation TR2 est appliquée sur au moins un profil stocké par la deuxième unité de traitement 49, ci-après l'unité de traitement 49. Dans une réalisation, la deuxième transformation TR2 inclut un filtrage et/ou une compression. Cette deuxième transformation TR2 peut s'avérer avantageuse ou nécessaire lorsque, par exemple, les conditions de fonctionnement du réseau 9 de zone métropolitaine ne permettent pas, temporairement ou non, la distribution d'un profil même si ce profil a pu être préalablement généré et segmenté. Dans un tel cas, la deuxième transformation TR2 permet de transformer un profil en une version dont les conditions du réseau 9 de zone métropolitaine permettent une distribution. Dans ce cas, le manifeste est mis à jour en conséquence.

Dans les cas où les conditions du réseau 9 de zone métropolitaine sont altérées, un profil du manifeste peut être filtré. En d'autres termes, le profil segmenté en question n'est pas transformé mais n'est plus renseigné dans le manifeste de sorte qu'il ne peut plus faire l'objet d'une requête. Le manifeste mis à jour est ensuite rendu accessible aux terminaux de réception à la place du manifeste précédent. Ainsi, tant que les conditions de fonctionnement du réseau 9 de zone métropolitaine ne permettent pas la distribution d'un profil, un utilisateur ne peut demander la distribution du profil en question, ce dernier n'étant pas renseigné dans le manifeste.

Les étapes U1, U2, U3, U4 et U5 de ce deuxième mode de réalisation sont ici appelées « étapes » mais peuvent être également considérées comme des sous-étapes de l'étape S3. Comme expliqué précédemment, l'exécution des étapes U1, U2, U3, U4 et U5 est un mode de réalisation de l'étape S3. Dans le mode de réalisation du procédé décrit en référence à la **Figure 5,** la segmentation des profils selon différents protocoles précède la réception d'une requête. Néanmoins, les technologies dites de *Just in Time* (JIT) permettent de procéder à la segmentation des profils reçus par l'intégrateur 25 après réception de la requête et en fonction de la requête. En variante, un profil est segmenté selon un seul protocole, à l'avance ou à réception d'une première requête, avantageusement le protocole le plus susceptible d'être demandé, de manière à optimiser les capacités de stockage de la mémoire 29 de l'intégrateur 25.

L'exemple décrit ci-après illustre ce deuxième mode de réalisation, notamment l'étape U5 d'application de la deuxième transformation TR2 et/ou la mise à jour du manifeste :

On suppose que le premier groupe GR1 de flux de données vidéo comprend un premier $F_{11}$, un deuxième $F_{12}$ et un troisième $F_{13}$ flux de données vidéo, définis ainsi après application de la première transformation TR1 respectivement sur chaque flux de données déjà encodé du premier groupe GR1 de flux de données vidéo (le troisième flux n'est pas représenté sur les figures) :

- $F_{11}$ : Ultra-haute définition (connue sous l'acronyme UHD) à 50 images par seconde
- $F_{12}$ : Haute-définition (connue sous l'acronyme HD) à 50 images par seconde
- $F_{13}$ : Quad Haute-définition (connue sous l'acronyme QHD) à 25 images par seconde

Les trois flux de données déjà encodés puis transformés sont donc trois profils différents. Ces profils sont ensuite segmentés selon différents protocoles de segmentation.

Si l'accessibilité, les conditions ou l'état du réseau 9 de zone métropolitaine ne permettent pas une distribution à la pluralité de terminaux de réception de profils avec une définition supérieure à la haute-définition et à plus de 25 images par seconde, l'unité de traitement 49 applique une deuxième transformation au premier $F_{11}$ et au deuxième $F_{12}$ profils vidéo. Le troisième profil vidéo $F_{13}$ présente des propriétés compatibles avec les limites du réseau 9 de zone métropolitaine et ne nécessite donc pas l'application de la deuxième transformation TR2.

Par exemple, le premier profil vidéo $F_{11}$ est filtré. Ce premier profil vidéo $F_{11}$ ne sera donc plus accessible à la pluralité de terminaux de réception. En conséquence et comme expliqué précédemment, ce profil sera donc également filtré du manifeste. En d'autres termes, les données représentatives de ce premier profil vidéo $F_{11}$ seront supprimées du manifeste. Le manifeste, ainsi mis à jour, est ensuite rendu accessible aux terminaux de réception à la place du manifeste précédent. Ainsi, le premier profil vidéo $F_{11}$ ne peut plus faire l'objet d'une requête en provenance de l'un de la pluralité de terminaux de réception. Néanmoins, dans un mode de réalisation, il est également possible de filtrer le premier profil vidéo $F_{11}$ du manifeste sans supprimer le premier profil de la mémoire 29. Le deuxième profil vidéo $F_{12}$ peut également être filtré. Néanmoins, afin de préserver une variété dans les versions disponibles du contenu multimédia et de ne pas modifier trop significativement le manifeste, ce deuxième profil vidéo $F_{12}$ peut en variante être compressé pour réduire le débit à 25 images par seconde. En conséquence, les données représentatives du deuxième profil vidéo $F_{12}$ dans le manifeste sont modifiées.

Un premier et un deuxième modes de réalisation de l'invention ont été présentés dans la description. Ces deux modes de réalisation sont compatibles et peuvent être implémentés conjointement. Autrement dit, une architecture mixte réunissant des unités fonctionnelles et équipements présentés dans le premier mode de réalisation illustré en **Figure 1,** et des unités fonctionnelles et équipements présentés dans le deuxième mode de réalisation illustré en **Figure 2** peut être prévue. Une telle architecture mixte permet la mise en œuvre du procédé décrit en référence à la **Figure 3,** et notamment la mise en œuvre de l'étape S3 selon le premier mode de réalisation illustré en **Figure 4** lorsque le transcodage est possible, ou selon le deuxième mode de réalisation illustré en **Figure 5** lorsque le transcodage n'est pas possible.

L'invention présente plusieurs avantages.

Tout d'abord, la localisation physique du système 5 au sein du réseau 9 de zone métropolitaine, au plus près de l'utilisateur final, permet de réduire la charge sur le réseau étendu (en amont) puisque ce dernier transporte un unique flux audio-vidéo F d'un contenu multimédia. Cet unique flux audio-vidéo fait office de référence, pour le système 5, pour en tirer diverses versions du même contenu multimédia. En d'autres termes, une partie du traitement des fichiers multimédia est délocalisé en aval de la plateforme de distribution de sorte que les quantités de données transmises depuis la plateforme de distribution vers les utilisateurs finaux sont réduites.

En outre, les capacités de stockage des plateformes de distribution, telles que la plateforme de distribution 3, sont moins sollicitées. Toutes choses égales par ailleurs, le système proposé permet donc de supporter une augmentation du nombre de requêtes clients par rapport aux systèmes existants.

Enfin, les fournisseurs de contenus ont davantage de maîtrise dans la distribution des contenus multimédias. Le deuxième mode de réalisation du système 5 permet notamment de modifier ou de supprimer des profils ne respectant pas les conditions du réseau 9 de zone métropolitaine.

## Revendications

**1.** Procédé de traitement mis en œuvre par des moyens informatiques, dans un réseau (9) de zone métropolitaine (MAN), d'un contenu multimédia préalablement encodé numériquement en un flux audio-vidéo (F) et transmis depuis une plateforme de distribution (3) en vue d'une transmission à la demande à une pluralité de terminaux de réception (41, 43), le procédé comprenant les étapes suivantes :

- appliquer (S2) une fonction de démultiplexage au flux audio-vidéo, ladite fonction étant agencée pour générer au moins un groupe de flux de données (GR1, GR2, GR3),
- décoder (T1) les flux de données de l'au moins un groupe de flux de données,
- appliquer (T2, U1) une transformation (TR1) sur chaque flux de données ($F_{11}$, $F_{12}$, $F_{21}$, $F_{22}$, $F_{31}$) décodé de l'au moins un groupe de flux de données, ladite transformation étant une opération ou un ensemble d'opérations parmi au moins les opérations suivantes: modification du nombre de trames par secondes, redimensionnement, réduction du bruit, lissage ou correction d'erreurs présentes dans ledit flux de données,
- encoder (T3) chaque flux de données de l'au moins un groupe de flux de données transformés, consécutivement à l'étape d'application de la transformation,
- segmenter (T4, U2) chaque flux de données de l'au moins un groupe de flux de données encodés,
- produire (T5, U3) un manifeste comportant des données représentatives des flux de données segmentés parallèlement ou consécutivement à l'étape de segmentation des flux de données encodés,
- stocker (T6, U4) l'au moins un groupe de flux de données segmentés dans une mémoire (29),

le procédé comprenant en outre, lorsque des conditions de fonctionnement du réseau de zone métropolitaine ne permettent pas la distribution d'au moins un flux de données segmenté :

- appliquer (U5) une transformation supplémentaire (TR2), incluant un filtrage et/ou une compression, audit au moins un flux de données segmenté, et
- mettre à jour le manifeste en conséquence,

dans lequel le manifeste produit ou mis à jour est rendu accessible à la pluralité de terminaux de réception,

le procédé comprenant en outre, seulement en réponse à une requête émise par un terminal de réception (41) parmi la pluralité de terminaux de réception, les étapes suivantes :

- sélectionner (S5) en fonction de la requête au moins un flux de données d'au moins un groupe de flux de données stockés,
- transmettre (S6) l'au moins un flux de données sélectionné à destination du terminal de réception émetteur de la requête.

**2.** Procédé selon la revendication 1, dans lequel la fonction de démultiplexage est adaptée pour générer un premier groupe (GR1) de flux de données vidéo, un deuxième groupe (GR2) de flux de données audio et un troisième groupe (GR3) de flux de données de texte et/ou sous-titrage.

**3.** Procédé selon la revendication 1 ou 2, dans lequel l'étape de segmentation des flux de données est mise en œuvre selon un protocole de type *HTTP Adaptative Streaming.*

**4.** Procédé selon l'une des revendications précédentes, dans lequel l'au moins un flux de données sélectionné est transmis à destination du terminal de réception via un serveur (7) du réseau de zone métropolitaine (MAN), le serveur étant distant de la plateforme de distribution et de la pluralité de terminaux de réception, et couplé à une mémoire (35), ladite mémoire étant adaptée pour stocker temporairement l'au moins un flux de données transmis.

**5.** Procédé selon l'une des revendications précédentes, dans lequel l'au moins un flux de données sélectionné est transmis à destination du terminal de réception via un serveur (7) du réseau de zone métropolitaine (MAN), le serveur étant distant de la plateforme de distribution et de la pluralité de terminaux de réception, et couplé à une mémoire (35), ladite mémoire étant adaptée pour stocker temporairement l'au moins un flux de données transmis, la durée de conservation de l'au moins un flux de données stocké dans la mémoire étant fonction dudit protocole.

**6.** Procédé selon la revendication 4 ou 5, dans lequel, en réponse à une requête ultérieure à la première et émise par un deuxième terminal de réception (43) parmi la pluralité de terminaux de réception, au moins un flux de données stocké dans la mémoire est transmis audit deuxième terminal de réception.

**7.** Programme informatique comprenant des instructions pour la mise en œuvre du procédé selon l'une des revendications précédentes, lorsque lesdites instructions sont exécutées par au moins un processeur (15, 31, 37).

**8.** Système (5) de traitement, dans un réseau (9) de zone métropolitaine (MAN), d'un contenu multimédia, préalablement encodé numériquement en un flux audio-vidéo (F) et transmis au système depuis une plateforme de distribution (3), en vue d'une transmission à la demande à une pluralité de terminaux de réception (41, 43), le système comprenant :

- un module de démultiplexage (17) agencé pour appliquer une fonction de démultiplexage au flux audio-vidéo reçu et générer au moins un groupe de flux de données (GR1, GR2, GR3),
- un module de décodage (19) agencé pour décoder les flux de données de l'au moins un groupe de flux de données en sortie du module de démultiplexage,
- une unité de traitement (21) agencée pour appliquer une transformation (TR1) sur chaque flux de données ($F_{11}$, $F_{12}$, $F_{21}$, $F_{22}$, $F_{31}$) décodé de l'au moins un groupe de flux de données, ladite transformation étant une opération ou un ensemble d'opérations parmi au moins les opérations suivantes: modification du nombre de trames par secondes, redimensionnement, réduction du bruit, lissage ou correction d'erreurs présentes dans ledit flux de données,
- un module d'encodage (23) adapté pour encoder chaque flux de données de l'au moins un groupe de flux de données transformés en sortie de l'unité de traitement,
- un intégrateur (25) agencé pour segmenter chaque flux de données de l'au moins un groupe de flux de données encodés et produire un manifeste comportant des données représentatives des flux de données segmentés parallèlement ou consécutivement à la segmentation des flux de données encodés,
- une mémoire (31), couplée à l'intégrateur, adaptée pour stocker l'au moins un groupe de flux de données segmentés,
- un module de communication (27) agencé pour réceptionner des requêtes émises par des terminaux de réception,

dans lequel l'unité de traitement ou une unité de traitement supplémentaire (49) du système est agencée, lorsque des conditions de fonctionnement du réseau de zone métropolitaine ne permettent pas la distribution d'au moins un flux de données segmenté, pour appliquer une transformation supplémentaire (TR2), incluant un filtrage et/ou une compression, audit au moins un flux de données segmenté, l'intégrateur étant agencé en outre pour mettre à jour le manifeste en conséquence, l'intégrateur étant agencé en outre pour rendre le manifeste produit ou mis à jour accessible à la pluralité de terminaux de réception,

l'intégrateur étant agencé en outre pour sélectionner, uniquement à la réception par le module de communication d'une requête émise par un terminal de réception (41) de la pluralité de terminaux de réception, en fonction de la requête au moins un flux de données d'au moins un groupe de flux de données stockés,

le module de communication étant agencé en outre pour transmettre l'au moins un flux de données sélectionné à destination du terminal de réception émetteur de la requête via un serveur distant (7).

9. Système selon la revendication 8, dans lequel la plateforme de distribution forme une passerelle entre un réseau étendu (WAN) et le réseau de zone métropolitaine (MAN).

**Patentansprüche**

1. Von Datenverarbeitungseinrichtungen durchgeführtes Verfahren zur Verarbeitung eines in einen Audio-Video-Fluss (F) zuvor digital kodierten und von einer Verteilungsplattform (3) aus gesendeten Multimedia-Inhalts in Hinblick auf eine Sendung-auf-Abruf zu mehreren Empfangsendgeräten (41, 43) in einem Ballungsraum-Netz (MAN) (9), wobei das Verfahren die folgenden Schritte aufweist:

> - Anwenden (S2) einer Demultiplex-Funktion auf den Audio-Video-Fluss, wobei die Funktion konfiguriert ist, um mindestens eine Gruppe Datenflüsse (GR1, GR2, GR3) zu generieren,
> - Dekodieren (T1) der Datenflüsse der mindestens einen Gruppe Datenflüsse,
> - Anwenden (T2, U1) einer Transformation (TR1) auf jeden dekodierten Datenfluss ($F_{11}$, $F_{12}$, $F_{21}$, $F_{22}$, $F_{31}$) der mindestens einen Gruppe Datenflüsse, wobei die Transformation eine Operation oder eine Gesamtheit von Operationen unter den folgenden Operationen ist: Modifikation der Anzahl von Rahmen pro Sekunde, Re-Dimensionierung, Reduzierung des Rauschens, Glättung oder Korrektur von in dem Datenfluss vorhandenen Fehlern,
> - Kodieren (T3) jedes Datenflusses der mindestens einen Gruppe transformierter Datenflüsse im Anschluss an den Schritt der Anwendung der Transformation,
> - Segmentieren (T4, U2) jedes Datenflusses der mindestens einen Gruppe kodierter Datenflüsse,
> - Erzeugen (T5, U3) eines Manifestes, das repräsentative Daten der segmentierten Datenflüsse aufweist, parallel zu dem oder im Anschluss an den Schritt der Segmentation der kodierten Datenflüsse,
> - Speichern (T6, U4) der mindestens einen Gruppe segmentierter Datenflüsse in einem Speicher (29),

wobei, wenn Betriebszustände des Ballungsraum-Netzes die Verteilung mindestens eines segmentierten Datenflusses nicht erlauben, das Verfahren außerdem aufweist:

> - Anwenden (U5) einer zusätzlichen Transformation (TR2), die eine Filterung und/oder eine Kompression einschließt, auf den mindestens einen segmentierten Datenfluss, und
> - Aktualisieren des Manifestes dementsprechend,

in welchem das erzeugte oder aktualisierte Manifest den mehreren Empfangsendgeräten zugänglich gemacht wird,

wobei das Verfahren außerdem, nur als Antwort auf eine von einem Empfangsendgerät (41) der mehreren Empfangsendgeräte gesendete Anfrage, die folgenden Schritte aufweist:

> - Wählen (S5) mindestens eines Datenflusses der mindestens einen Gruppe gespeicherter Datenflüsse als Funktion der Anfrage,
> - Senden (S6) des mindestens einen gewählten Datenflusses zu dem Empfangsendgerät, das die Anfrage gesendet hat.

2. Verfahren nach Anspruch 1, in welchem die Demultiplex-Funktion angepasst ist, um eine erste Gruppe (GR1) von Videodatenflüssen, eine zweite Gruppe (GR2) von Audiodatenflüssen (GR2) und eine dritte Gruppe (GR3) von Text- und/oder Untertitel-Datenflüssen zu generieren.

3. Verfahren nach Anspruch 1 oder 2, in welchem der Schritt der Segmentation der Datenflüsse gemäß einem Protokoll des Typs *HTTP Adaptative Streaming* durchgeführt wird.

4. Verfahren nach einem der vorstehenden Ansprüche, in welchem der mindestens eine gewählte Datenfluss über einen Server (7) des Ballungsraum-Netzes (MAN) zu dem Empfangsendgerät gesendet wird, wobei der Server fernab von der Verteilungsplattform und den mehreren Empfangsendgeräten ist und mit einem Speicher (35) gekoppelt ist, wobei der Speicher angepasst ist, um den mindestens einen gesendeten Datenfluss temporär zu speichern.

5. Verfahren nach einem der vorstehenden Ansprüche, in welchem der mindestens eine gewählte Datenfluss über einen Server (7) des Ballungsraum-Netzes (MAN) zu dem Empfangsendgerät gesendet wird, wobei der Server entfernt von der Verteilungsplattform und den mehreren Empfangsendgeräten ist und mit einem Speicher (35) gekoppelt ist, wobei der Speicher angepasst ist, um den mindestens einen gesendeten Datenfluss temporär zu speichern, wobei die Aufbewahrungsdauer des mindestens einen in dem Speicher gespeicherten Datenflusses abhängig von dem Protokoll ist.

6. Verfahren nach Anspruch 4 oder 5, in welchem als Antwort auf eine Anfrage, die später als die erste und von einem zweiten Empfangsendgerät (43) der mehreren Empfangsendgeräte ausgesendet wird, mindestens ein in dem Speicher gespeicherter Datenfluss zu dem zweiten Empfangsendgerät gesendet wird.

7. Informatikprogramm aufweisend Befehle zum Durchführen des Verfahrens nach einem der vorstehenden Ansprüche, wenn die Befehle von mindestens einem Prozessor (15, 31, 37) ausgeführt werden.

8. System (5) zur Verarbeitung eines in einen Audio-Video-Fluss (F) zuvor digital kodierten und von einer Verteilungsplattform (3) aus zu dem System gesendeten Multimedia-Inhalts in Hinblick auf eine Sendung-auf-Abruf zu mehreren Empfangsendgeräten (41, 43) in einem Ballungsraum-Netz (MAN) (9), wobei das System aufweist:

   - ein Demultiplex-Modul (17), das konfiguriert ist, um eine Demultiplex-Funktion auf den empfangenen Audio-Video-Fluss anzuwenden und um mindestens eine Gruppe Datenflüsse (GR1, GR2, GR3) zu generieren,
   - ein Dekodierungsmodul (19), das konfiguriert ist, um die Datenflüsse der mindestens einen Gruppe Datenflüsse am Ausgang des Demultiplex-Moduls zu dekodieren,
   - eine Verarbeitungseinheit (21), die konfiguriert ist, um eine Transformation (TR1) auf jeden dekodierten Datenfluss ($F_{11}$, $F_{12}$, $F_{21}$, $F_{22}$, $F_{31}$) der mindestens einen Gruppe Datenflüsse anzuwenden, wobei die Transformation eine Operation oder eine Gesamtheit von Operationen unter den folgenden Operationen ist: Modifikation der Anzahl von Rahmen pro Sekunde, Re-Dimensionierung, Reduzierung des Rauschens, Glättung oder Korrektur von in dem Datenfluss vorhandenen Fehlern,
   - ein Kodierungsmodul (23), das angepasst ist, um jeden Datenfluss der mindestens einen Gruppe transformierter Datenflüsse am Ausgang der Verarbeitungseinheit zu kodieren,
   - einen Integrator (25), der konfiguriert ist, um jeden Datenfluss der mindestens einen Gruppe kodierter Datenflüsse zu segmentieren und, parallel zu dem oder im Anschluss an die Segmentation der kodierten Datenflüsse, ein Manifest, das repräsentative Daten der segmentierten Datenflüsse aufweist, zu erzeugen,
   - einen mit dem Integrator gekoppelten Speicher (31), der angepasst ist, um die mindestens eine Gruppe segmentierter Datenflüsse zu speichern,
   - ein Kommunikationsmodul (27), das konfiguriert ist, um von Empfangsendgeräten gesendete Anfragen zu empfangen,

wobei die Verarbeitungseinheit oder eine zusätzliche Verarbeitungseinheit (49) des Systems konfiguriert ist, um, wenn Betriebszustände des Ballungsraum-Netzes die Verteilung mindestens eines segmentierten Datenflusses nicht erlauben, eine zusätzliche Transformation (TR2), die eine Filterung und/oder Kompression einschließt, auf den mindestens einen segmentierten Datenfluss anzuwenden, wobei der Integrator außerdem konfiguriert ist, um das Manifest dementsprechend zu aktualisieren,

   wobei der Integrator außerdem konfiguriert ist, um das erzeugte oder aktualisierte Manifest den mehreren Empfangsendgeräten zugänglich zu machen,
   wobei der Integrator außerdem konfiguriert ist, um ausschließlich beim Empfang einer von einem Empfangsendgerät (41) der mehreren Empfangsendgeräte ausgesendeten und von dem Kommunikationsmodul empfangenen Anfrage mindestens einen Datenfluss der mindestens einen Gruppe gespeicherter Datenflüsse als Funktion der Anfrage zu wählen,
   wobei das Kommunikationsmodul außerdem konfiguriert ist, um den mindestens einen gewählten Datenfluss über einen Fernserver (7) zu dem Empfangsendgerät, das die Anfrage gesendet hat, zu senden.

9. System nach Anspruch 8, in welchem die Verteilungsplattform eine Brücke zwischen einem überregionalen Netz (WAN) und einem Ballungsraum-Netz (MAN) bildet.

**Claims**

1. A method implemented by computer means, in a metropolitan area network (9) (MAN), for processing a multimedia content previously digitally encoded into an audio-video stream (F) and transmitted from a distribution platform (3) for the purposes of on-demand transmission to a plurality of receiving terminals (41, 43), the method comprising the following steps:

   - applying (S2) a demultiplexing function to the audio-video stream, said function being arranged to generate at least one group of data streams (GR1, GR2, GR3),

-- decoding (T1) the data streams of the at least one group of data streams,

- applying (T2, U1) a transformation (TR1) to each decoded data stream ($F_{11}$, $F_{12}$, $F_{21}$, $F_{22}$, $F_{31}$) of the at least one group of data streams, said transformation being an operation or a set of operations among at least the following operations: changing the number of frames per second, resizing, reducing noise, smoothing or correcting errors present in said data stream,

- encoding (T3) each data stream of the at least one group of transformed data streams, after the step of applying the transformation,

- segmenting (T4, U2) each data stream of the at least one group of encoded data streams,

- producing (T5, U3) a manifest containing data representative of the segmented data streams in parallel with or subsequent to the step of segmenting the encoded data streams,

- storing (T6, U4) the at least one group of segmented data streams in a memory,

the method further comprising, when the operating conditions of the metropolitan area network do not allow the distribution of at least one segmented data stream:

- applying (U5) an additional transformation (TR2), including filtering and/or compressing, to the at least one segmented data stream, and
- updating the manifest accordingly,

wherein the produced or updated manifest is made available to the plurality of receiving terminals, the method further comprising, only in response to a request issued by a receiving terminal among the plurality of receiving terminals, the following steps:

- selecting (S5), on the basis of the request, at least one data stream of at least one group of stored data streams,
- transmitting (S6) the at least one selected data stream to the receiving terminal that issued the request.

2. The method according to claim 1, wherein the demultiplexing function is adapted to generate a first group (GR1) of video data streams, a second group (GR2) of audio data streams, and a third group (GR3) of text and/or closed-caption data streams.

3. Method according to claim 1 or 2, wherein the step of segmenting the data streams is implemented according to an HTTP Adaptive Streaming type of protocol.

4. Method according to one of the previous claims, wherein the at least one selected data stream is transmitted to the receiving terminal via a server (7) of the metropolitan area network (MAN), the server being remote from the distribution platform and from the plurality of receiving terminals, and coupled to a memory (35), said memory being suitable for temporarily storing the at least one transmitted data stream.

5. Method according to one of the previous claims, wherein the at least one selected data stream is transmitted to the receiving terminal via a server (7) of the metropolitan area network (MAN), the server being remote from the distribution platform and from the plurality of receiving terminals, and coupled to a memory (35), said memory being suitable for temporarily storing the at least one transmitted data stream, the retention period for the at least one data stream stored in the memory being a function of said protocol.

6. Method according to claim 4 or 5, wherein, in response to a request subsequent to the first and issued by a second receiving terminal (43) among the plurality of receiving terminals, at least one data stream stored in the memory is transmitted to said second receiving terminal.

7. Computer program comprising instructions for implementing the method according to one of the previous claims, when said instructions are executed by at least one processor (15, 31, 37).

8. System (5) for processing, in a metropolitan area network (9) (MAN), a multimedia content previously digitally encoded into an audio-video stream (F) and transmitted to the system from a distribution platform (3), for the purposes of on-demand transmission to a plurality of receiving terminals (41, 43), the system comprising:

- a demultiplexing module (17) arranged to apply a demultiplexing function to the audio-video stream received and to generate at least one group of data streams (GR1, GR2, GR3),
- a decoding module (19) arranged to decode the data streams of the at least one group of data streams output from the demultiplexing module,
- a processing unit (21) arranged to apply a transformation (TR1) to each decoded data stream ($F_{11}$, $F_{12}$, $F_{21}$, $F_{22}$, $F_{31}$) of the at least one group of data streams, said transformation being an operation or a set of operations among at least the following operations: changing the number of frames per second, resizing, reducing noise, smoothing or correcting errors present in said data stream,

- an encoding module (23) adapted to encode each data stream of the at least one group of transformed data streams output from the processing unit,

- a packager (25) arranged to segment each data stream of the at least one group of encoded data streams and to produce a manifest containing data representative of the segmented data streams in parallel with or subsequent to the step of segmenting the encoded data streams,

- a memory (31), coupled to the packager, adapted to store the at least one group of segmented data streams,

- a communication module (27) arranged to receive requests issued by receiving terminals,

wherein the processing unit or an additional processing unit (49) of the system is arranged, when the operating conditions of the metropolitan area network do not allow the distribution of at least one segmented data stream, to apply an additional transformation (TR2), including filtering and/or compressing, to the at least one segmented data stream, the packager being further arranged to update the manifest accordingly,

the packager being further arranged to make the produced or updated manifest available to the plurality of receiving terminals,

the packager being further arranged to select, only upon receipt by the communication module of a request issued by a receiving terminal (41) among the plurality of receiving terminals, on the basis of the request, at least one data stream data from the at least one group of stored data streams,

the communication module being further arranged to transmit the at least one selected data stream to the receiving terminal where the request originated via a remote server (7).

9. System according to claim 8, wherein the distribution platform forms a gateway between a wide area network (WAN) and the metropolitan area network (MAN).

FIG. 1

EP 3 481 069 B1

FIG. 2

EP 3 481 069 B1

EP 3 481 069 B1

FIG. 3

20

S3

DECOD — T1

TR1 — T2

COD — T3

FIG. 4

SEG — T4

MANIF — T5

ST — T6

S3

TR1 — U1

SEG — U2

MANIF — U3

FIG. 5

ST — U4

TR2 — U5

**EP 3 481 069 B1**

## RÉFÉRENCES CITÉES DANS LA DESCRIPTION

**Documents brevets cités dans la description**

- EP 2566172 A1